# EUROPÄISCHE PATENTSCHRIFT

(11) **EP 0 469 405 B1**
(45) Veröffentlichungstag und Bekanntmachung des Hinweises auf die Patenterteilung: **11.10.1995**
(21) Anmeldenummer: 91112091.3
(22) Anmeldetag: 19.07.1991
(51) Int. Cl.: C08K 5/17, C08F 8/30, C08F 14/06

(54) **Wässrige Polymerisatdispersionen**
Aqueous polymer dispersions
Dispersions polymères aqueuses

(30) Priorität: 30.07.1990 DE 4024154
(43) Veröffentlichungstag der Anmeldung: 05.02.1992
(73) Patentinhaber: BASF Aktiengesellschaft, 67063 Ludwigshafen (DE)
(72) Erfinder: Grubert, Heinrich, Dr., W-6900 Heidelberg (DE); Dersch, Rolf, Dr., W-6730 Neustadt (DE)
(74) Vertreter: Kinzebach, Werner, Dr.

(56) Entgegenhaltungen:
- US-A- 2 485 270
- US-A- 2 957 858
- US-A- 3 068 184
- US-A- 4 098 978

## Beschreibung

Die vorliegende Erfindung betrifft wäßrige Polymerisatdispersionen, die dadurch erhältlich sind, daß man ein Monomerengemisch, das 10 bis 100 Gew.-% an halogenhaltigen Monomeren enthält, in Gegenwart von 0,5 bis 6 Gew.-%, bezogen auf das Monomerengemisch, an ausschließlich anionischen und/oder nichtionischen grenzflächenaktiven Substanzen nach der Methode der radikalischen Emulsionspolymerisation in wäßrigem Medium polymerisiert und den pH-Wert der wäßrigen Phase der dabei anfallenden wäßrigen Polymerisatdispersion durch Zugabe von von Ammoniak sowie von primären und sekundären Aminen verschiedenen basischen Mitteln auf einen Wert von 5 bis 10 einstellt, wobei die Zugabe der basischen Mittel vor, während und/oder nach der Emulsionspolymerisation erfolgen kann.

Wäßrige Polymerisatdispersionen mit im Polymerisatanteil eingebauten halogenhaltigen Monomeren eignen sich in vielfältiger Weise als Bindemittel, insbesondere dort, wo auf erhöhte Brandsicherheit Wert gelegt wird, da ihre Verfilmungen eine reduzierte Neigung zum Entflammen aufweisen.

Es ist bekannt, daß die wäßrige Phase von ohne basische Hilfsmittel hergestellten wäßrigen Polymerisatdispersionen in der Regel einen pH-Wert < 5 aufweist, was sich für zahlreiche Verwendungen nachteilig auswirkt, so daß der pH-Wert im allgemeinen durch Zusatz basischer Mittel erhöht wird.

Aus US-A-4 098 978 ist bekannt, den pH-Wert der wäßrigen Phase von wäßrigen Polymerisatdispersionen mit einpolymerisiertem Vinylchlorid und/oder Vinylidenchlorid im Polymerisatanteil durch Zugabe basischer Stoffe wie Ammoniak, NaOH und KOH zu erhöhen, wobie die Polymere, die mit NaOH bzw. KOH als basischem Mittel erzeugt wurden, sich nach weniger als 15 Minuten deutlich verfärbten.

Aus der DE-A 2 246 499 ist bekannt, den pH-Wert der wäßrigen Phase von wäßrigen Polymerisatdispersionen mit einpolymerisiertem Vinylchlorid und/oder Vinylidenchlorid im Polymerisatanteil durch Zugabe basischer Stoffe wie Ammoniak, Alkalilauge, Amine, Sulfide oder basische Metallverbindungen aus der 2. Gruppe des Periodensystems zu erhöhen. Nachteilig an diesen Polymerisatdispersionen ist jedoch, daß sich die ursprünglich weißen Dispersionen bei der Neutralisation braun verfärben, wobei gemäß der Lehre der DE-A 2 246 499 die geringste Verfärbung bei der Verwendung von Ammoniak als basischem Stoff auftritt. Durch Zusatz einer Epoxidverbindung läßt sich das Verfärben gemäß der DE-A 2 246 499 im wesentlichen unterdrücken.

Aufgabe der vorliegenden Erfindung war, wäßrige Polymerisatdispersionen mit einpolymerisierten halogenhaltigen Monomeren im Polymerisatanteil zur Verfügung zu stellen, deren pH-wert durch Zusatz basischer Mittel auf einen wert von 5 bis 10 eingestellt wird und die ebenso wie ihre Verfilmungen auch ohne Zusatz einer Epoxidverbindung auch nach längerer Lagerung im wesentlichen keine Verfärbung aufweisen.

Demgemäß wurden die eingangs definierten wäßrigen Polymerisatdispersionen gefunden.

Bevorzugte halogenhaltige Monomere sind Vinylbromid, Vinylchlorid und Vinylidenchlorid, unter denen Vinylchlorid und Vinylidenchlorid besonders bevorzugt werden. Als Comonomere eignen sich beispielsweise Ester der Acryl- oder Methacrylsäure mit 1 bis 10 C-Atome enthaltenden aliphatischen Alkoholen, wobei die Methyl-, Ethyl-, Isopropyl-, n-, iso- und tert.-Butyl-, n-Hexyl- sowie 2-Ethylhexylester bevorzugt sind. Ferner eigenen sich als Comonomere α,β-monoethylenisch ungesättigte Carbonsäuren wie Acryl- und Methacrylsäure, Vinylester niederer Alkancarbonsäuren wie Vinylacetat und Vinylpropionat, Nitrile von niederen α,β-monoethylenisch ungesättigten Carbonsäuren wie Acrylnitril und Methacrylnitril sowie die Amide dieser Carbonsäuren, Acrylsäure- oder Methacrylsäureester mit niederen mehrwertigen Alkoholen, ungesättigte Sulfon- und Phosphonsäuren, aber z.B. auch niedere einfach- oder mehrfach ungesättigte Kohlenwasserstoffe wie Ethylen, Propen und Butadien. Vorzugsweise enthält das zu polymerisierende Monomerengemisch, bezogen auf die Gesamtmenge der Monomeren, 20 bis 90 Gew.-% an halogenhaltigen Monomeren.

Geeignete Polymerisationsinitiatoren sind vor allem anorganische Peroxide wie Natrium-, Kalium- oder Ammoniumperoxidisulfat und Wasserstoffperoxid. Ferner eignen sich Azoverbindungen wie 2,2'-Azobisisobutyronitril sowie organische Peroxide wie Dibenzoylperoxid, t-Butylperpivalat oder Hydroperoxide wie t-Butylhydroperoxid, aber auch kombinierte Systeme, die aus wenigstens einem organischen Reduktionsmittel und wenigstens einem Peroxid und/oder Hydroperoxid zusammengesetzt sind, z.B. t-Butylhydroperoxid und das Na-Salz der Hydroxymethansulfinsäure, sowie kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen (II) sulfat/Natriumperoxidisulfat, wobei anstelle von Ascorbinsäure auch häufig das Na-Salz der Hydroxymethansulfinsäure, Natriumsulfit, Natriumhydrogensulfit oder Natriummetabisulfit eingesetzt werden.

Die für die Emulsionspolymerisation eingesetzte Menge an Polymerisationsinitiatoren wird vorzugsweise niedrig gehalten und liegt, bezogen auf die Monomeren, in der Regel bei 0,05 bis 1 Gew.-%, vorzugsweise beträgt ihr Anteil 0,1 bis 0,3 Gew.-%.

Vorzugsweise werden als grenzflächenaktive Substanzen ausschließlich anionische und/oder nichtionische Emulgatoren verwendet.

Vorzugsweise eingesetzte nichtionische Emulgatoren sind ethoxylierte Alkanole (EO-Grad: 2 bis 100, Alkylrest: C₈ bis C₃₆), ethoxylierte 1 bis 4 olefinische Doppelbindungen enthaltende Alkohole (EO-Grad: 2 bis 100, Kettenlänge: C₈ bis C36), ethoxylierte mono-, di- oder tri-Alkylphenole oder -naphthole (EO-Grad: 2 bis 100, Alkylrest: C₄ bis C₃₆), ethoxylierte aliphatische Monocarbonsäuren (EO-Grad: 6 bis 50, Alkylrest: C₈ bis C₂₄) und ethoxylierte 1 bis 4 olefinische Doppelbindungen enthaltene Monocarbonsäuren (EO-Grad: 6 bis 50, Alkylrest: C₈ bis C₂₄).

In vorteilhafter Weise eingesetzte anionische Emulgatoren sind die Alkalimetall- und Ammoniumsalze der sulfatierten Derivate von 6 bis 18 C-Atome enthaltenden Alkanolen, 6 bis 18 C-Atome und 1 bis 4 olefinische Doppelbindungen enthaltenden Alkoholen, ethoxylierten Alkanolen (EO-Grad: 4 bis 30, Alkylrest: C₁₂ bis C₁₈), ethoxylierten 1 bis 4 olefinische Doppelbindungen enthaltenden Alkoholen (EO-Grad: 4 bis 30, Alkylrest: C₁₂ bis C₁₈) und von ethoxylierten Alkylphenolen (EO-Grad: 4 bis 30, Alkylrest: C₈ bis C₁₄), die Alkalimetall- und Ammoniumsalze gesättigter und ungesättigter Carbonsäuren (Kettenlänge: C₈ bis C₂₄), die Alkalimetall- und Ammoniumsalze von 12 bis 18 C-Atome enthaltenden Alkylsulfonsäuren sowie die entsprechenden Salze von Alkylarylsulfonsäuren (Alkylrest: C₁₀ bis C₁₈) und von Estern der Sulfobernsteinsäure mit 4 bis 18 C-Atomen enthaltenden Alkoholen.

Neben anionischen und/oder nichtionischen Emulgatoren können als grenzflächenaktive Substanzen auch anionische und/oder nichtionische Schutzkolloide mitverwendet werden. Geeignete Schutzkolloide sind z.B. hochmolekulare Verbindungen wie Polyvinylalkohole, Polyvinylpyrrolidone, Cellulosederivate, Polyacrylamide, Polymethacrylamide, Polycarbonsäuren oder deren Alkalimetall- oder Ammoniumsalze. Weiterhin können im Rahmen der Emulsionspolymerisation auch das Molekulargewicht regelnde Substanzen mitverwendet werden. Vorzugsweise beträgt die Gesamtmenge der eingesetzten grenzflächenaktiven Substanzen, bezogen auf das Monomerengemisch, 0,5 bis 4 Gew.-%.

Die Emulsionspolymerisationstemperatur beträgt in der Regel 30 bis 90°C. Besonders an Verfärbungen freie erfindungsgemäße Dispersionen werden jedoch dann erhalten, wenn die Emulsionspolymerisationstemperatur 30 bis 70°C beträgt. Das Polymerisationsmedium kann sowohl aus Wasser als auch aus Mischungen aus Wasser und damit mischbaren Flüssigkeiten wie Methanol bestehen. Vorzugsweise wird nur Wasser verwendet. Die Emulsionspolymerisation kann sowohl als Chargenprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt und anschließend den Rest in getrennten Zuläufen, von denen einer oder mehrere die Monomeren in reiner oder in emulgierter Form enthalten, kontinuierlich, stufenweise oder unter Überlagerung eines Konzentrationsgefälles zuführt. Der Feststoffgehalt der so erhältlichen wäßrigen Polymerisatdispersion beträgt im allgemeinen 5 bis 60 Gew.-%.

Als basische Mittel für die Erhöhung des pH-Wertes kommen insbesondere Metallsalze schwacher Säuren, z.B. Alkalimetallacetate, -formiate oder -carbonate, tertiäre Amine wie Triethylamin, vor allem aber Alkalimetall- und Erdalkalimetallhydroxide oder -oxide wie KOH, NaOH und Ca(OH)₂ in Betracht, unter denen Ca(OH)₂ besonders bevorzugt wird.

Überraschenderweise weisen sowohl die erfindungsgemäßen wäßrigen Polymerisatdispersionen als auch deren Verfilmungen, auch nach längerer Lagerung, im wesentlichen keine Verfärbung auf.

### Beispiele

a) Herstellung von Ausgangsdispersionen D1 bis D8
   - D1:: Eine Mischung aus 25 kg Wasser, 0,02 kg Emulgator I, 0,03 kg Natriumperoxidisulfat (Na₂S₂O₈) und 0,0005 kg Eisen(II)sulfat-Heptahydrat (FeSO₄ · 7H₂O) wurde auf die Polymerisationstemperatur von 50°C erhitzt und mit 5 % eines Zulaufs 1 sowie 5 % eines Zulaufs 2 versetzt und während 15 min bei 50°C gehalten. Anschließend wurden unter Aufrechterhaltung der Polymerisationstemperatur synchron die verbliebene Menge an Zulauf 1 sowie die verbliebene Menge an Zulauf 2 und ein Zulauf 3 während 3,5 h kontinuierlich zugesetzt. Danach wurden ebenfalls bei 50°C während 30 min ein Zulauf 4 und während 1 h ein Zulauf 5 kontinuierlich zugeführt. Nachfolgend wurde unter Zugabe einer Mischung aus 0,12 kg einer 70 gew.-%igen wäßrigen-alkoholischen Lösung von t-Butylhydroperoxid und 0,05 kg Emulgator I in 0,35 kg Wasser und anschließender Zugabe von 0,17 kg des Na-Salzes der Hydroxymethansulfinsäure in 0,35 kg Wasser bei Raumtemperatur nachpolymerisiert.
   - Zulauf 1:: 55 kg Vinylchlorid
   10 kg Vinylpropionat
   35 kg n-Butylacrylat
   1,7 kg Emulgator II
   0,78 kg Emulgator I und
   41 kg Wasser
   - Zulauf 2:: 0,003 kg Na-Salz der Hydroxymethansulfinsäure,
   0,125 kg Natriumacetat und
   14 kg Wasser
   - Zulauf 3:: 0,162 kg Natriumperoxidisulfat und
   12 kg Wasser
   - Zulauf 4:: 0,048 kg Natriumperoxidisulfat und
   4 kg Wasser
   - Zulauf 5:: 0,0018 kg Na-Salz der Hydroxymethansulfinsäure,
   0,0273 kg Natriumacetat und
   4 kg Wasser
   Emulgator I: Na-Satz des sulfatierten Derivats von ethoxyliertem iso-Octylphenol (EO-Grad: 25)
   Emulgator II: ethoxyliertes iso-Octylphenol (EO-Grad: 25)
   - D2 bis D4:: Wie D1, jedoch wurde die Emulsionspolymerisation in der genannten Abfolge anstelle von 50°C bei 60, 70 sowie 80°C durchgeführt.
   - D5 bis D8:: In der genannten Abfolge wie D1 bis D4, jedoch wurde die Menge an eingesetztem Natriumperoxidisulfat jeweils um 50 % erhöht.
b) Zusatz basischer Mittel zu den Dispersionen D1 bis D8 und Überprüfung auf Verfärbung.
   Der pH-Wert der wäßrigen Phase der Dispersionen D1 bis D8 wurde jeweils durch Zusatz von Ammoniak, KOH, NaOH sowie Ca(OH)₂ auf einen Wert von 8 erhöht und die Verfärbung visuell beurteilt.
   Bei der Verwendung von Ammoniak trat eine deutliche Gelbfärbung auf, wohingegen bei Verwendung von KOH und NaOH nur ein geringer Gelbstich und bei Verwendung von Ca(OH)₂ keine Verfärbung auftrat. Dort wo Verfärbungen auftraten, nahm die Intensität in der Abfolge von D1 bis D8 zu.
   Anschließend wurden die alkalisch gestellten Dispersionen verfilmt, im Trockenschrank bei 50°C 14 Tage gelagert und wieder visuell auf Verfärbung beurteilt. Die Ergebnisse entsprachen jenen für den flüssigen Zustand.

## Patentansprüche (Patentansprüche für folgende(n) Vertragsstaat(en): BE, CH, DE, FR, GB, LI, NL)

1. Wäßrige Polymerisatdispersionen, dadurch erhältlich, daß man ein Monomerengemisch, das 10 bis 100 Gew.-% an halogenhaltigen Monomeren enthält, in Gegenwart von 0,5 bis 6 Gew.-%, bezogen auf das Monomerengemisch, an ausschließlich anionischen und/oder nichtionischen grenzflächenaktiven Substanzen nach der Methode der radikalischen Emulsionspolymerisation in wäßrigem Medium polymerisiert und den pH-Wert der wäßrigen Phase der dabei anfallenden wäßrigen Polymerisatdispersion durch Zugabe wenigstens eines basischen Mittels aus der Gruppe umfassend Alkalimetallacetate, Alkalimetallformiate, Alkalimetallcarbonate, tertiäre Amine wie Triethylamin, Alkalimetallhydroxide wie KOH und NaOH, Alkalimetalloxide und Erdalkalimetallhydroxide wie Ca(OH)₂ auf einen Wert von 5 bis 10 einstellt, wobei die Zugabe der basischen Mittel vor, während und/oder nach der Emulsionspolymerisation erfolgen kann.

2. Wäßrige Polymerisatdisperionen nach Anspruch 1, dadurch erhältlich, daß man das Monomerengemisch in Gegenwart von 0,5 bis 4 Gew.-%, bezogen auf das Monomerengemisch, an ausschließlich anionischen und/oder nichtionischen grenzflächenaktiven Substanzen polymerisiert.

## Patentansprüche (Patentansprüche für folgende(n) Vertragsstaat(en): ES)

1. Verfahren zur Herstellung wäßriger Polymerisatdispersionen, dadurch gekennzeichnet, daß man ein Monomerengemisch, das 10 bis 100 Gew.-% an halogenhaltigen Monomeren enthält, in Gegenwart von 0,5 bis 6 Gew.-%, bezogen auf das Monomerengemisch, an ausschließlich anionischen und/oder nichtionischen grenzflächenaktiven Substanzen nach der Methode der radikalischen Emulsionspolymerisation in wäßrigem Medium polymerisiert und den pH-Wert der wäßrigen Phase der dabei anfallenden wäßrigen Polymerisatdispersion durch Zugabe wenigstens eines basischen Mittels aus der Gruppe umfassend Alkalimetallacetate, Alkalimetallformiate, Alkalimetallcarbonate, tertiäre Amine wie Triethylamin, Alkalimetallhydroxide wie KOH und NaOH, Alkalimetalloxide und Erdalkalimetallhydroxide wie Ca(OH)₂ auf einen Wert von 5 bis 10 einstellt, wobei die Zugabe der basischen Mittel vor, während und/oder nach der Emulsionspolymerisation erfolgen kann.

2. Verfahren nach Anspruch 1, dadurch gekennzeichnet, daß man das Monomerengemisch in Gegenwart von 0,5 bis 4 Gew.-%, bezogen auf das Monomerengemisch, an ausschließlich anionischen und/oder nichtionischen grenzflächenaktiven Substanzen polymerisiert.

## Claims (Claims for the following Contracting State(s): BE, CH, DE, FR, GB, LI, NL)

1. An aqueous polymer dispersion obtainable by polymerizing a monomer mixture which contains from 10 to 100 % by weight of halogenated monomers in the presence of from 0.5 to 6 % by weight, based on the monomer mixture, of exclusively anionic and/or non-ionic surfactants by radical emulsion polymerization in aqueous medium, and adjusting the pH of the aqueous phase of the resulting aqueous polymer dispersion to from 5 to 10 by addition of at least one base from the group consisting of alkali metal acetates, alkali metal formates, alkali metal carbonates, tertiary amines such as triethylamine, alkali metal hydroxides such as KOH and NaOH, alkali metal oxides and alkaline earth metal hydroxides such as Ca(OH)₂, it being possible for the bases to be added before, during and/or after the emulsion polymerisation.

2. An aqueous polymer dispersion as claimed in claim 1, obtainable by polymerizing the monomer mixture in the presence of from 0.5 to 4 % by weight, based on the monomer mixture, of exclusively anionic and/or non-ionic surfactants.

## Claims (Claims for the following Contracting State(s): ES)

1. A process for the preparation of an aqueous polymer dispersion, which comprises polymerising a monomer mixture which contains from 10 to 100 % by weight of halogenated monomers in the presence of from 0.5 to 6 % by weight, based on the monomer mixture, of exclusively anionic and/or non-ionic surfactants by radical emulsion polymerization in aqueous medium, and adjusting the pH of the aqueous phase of the resulting aqueous polymer dispersion to from 5 to 10 by addition of at least one base from the group consisting of alkali metal acetates, alkali metal formates, alkali metal carbonates, tertiary amines such as triethylamine, alkali metal hydroxides such as KOH and NaOH, alkali metal oxides and alkaline earth metal hydroxides such as Ca(OH)₂, it being possible for the bases to be added before, during and/or after the emulsion polymerization.

2. A process as claimed in claim 1, wherein the monomer mixture is polymerized in the presence of from 0.5 to 4 % by weight, based on the monomer mixture, of exclusively anionic and/or non-ionic surfactants.

## Revendications (Revendications pour l'(les) Etat(s) contractant(s) suivant(s): BE, CH, DE, FR, GB, LI, NL)

1. Dispersions aqueuses de polymères, que l'on peut obtenir par le fait que l'on polymérise un mélange de monomères, qui contient 10 à 100% en poids de monomères contenant des halogènes, en présence de 0,5 à 6% en poids, par rapport au mélange des monomères, de substances surfactives exclusivement anioniques et/ou non ioniques, selon la méthode de la polymérisation en émulsion radicalaire, en milieu aqueux et on règle à 5-10 la valeur du pH de la phase aqueuse de la dispersion aqueuse de polymère ainsi obtenue, par l'addition d'au moins un agent basique appartenant au groupe qui englobe les acétates de métaux alcalins, les formiates de métaux alcalins, les carbonates de métaux alcalins, des amines tertiaires comme la triéthylamine, des hydroxydes de métaux alcalins comme KOH et NaOH, des oxydes de métaux alcalins et des hydroxydes de métaux alcalino-terreux tels que Ca(OH)₂, où l'addition des agents basiques peut s'effectuer avant, pendant et/ou après la polymérisation en émulsion.

2. Dispersions aqueuses de polymères suivant la revendication 1, que l'on peut obtenir par le fait que l'on polymérise le mélange des monomères en présence de 0,5 à 4% en poids, par rapport au mélange des monomères, de substances exclusivement anioniques et/ou non ioniques.

## Revendications (Revendications pour l'(les) Etat(s) contractant(s) suivant(s): ES)

1. Procédé de préparation de dispersions aqueuses de polymères, caractérisé en ce que l'on polymérise un mélange de monomères, qui contient 10 à 100% en poids de monomères contenant des halogènes, en présence de 0,5 à 6% en poids, par rapport au mélange des monomères, de substances surfactives exclusivement anioniques et/ou non ioniques, selon la méthode de la polymérisation en émulsion radicalaire, en milieu aqueux et on règle à 5-10 la valeur du pH de la phase aqueuse de la dispersion aqueuse de polymère ainsi obtenue, par l'addition d'au moins un agent basique appartenant au groupe qui englobe les acétates de métaux alcalins, les formiates de métaux alcalins, les carbonates de métaux alcalins, des amines tertiaires comme la triéthylamine, des hydroxydes de métaux alcalins comme KOH et NaOH, des oxydes de métaux alcalins et des hydroxydes de métaux alcalino-terreux tels que Ca(OH)₂, où l'addition des agents basiques peut s'effectuer avant, pendant et/ou après la polymérisation en émulsion.

2. Procédé suivant la revendication 1, caractérisé en ce que l'on peut obtenir par le fait que l'on polymérise le mélange des monomères en présence de 0,5 à 4% en poids, par rapport au mélange des monomères, de substances exclusivement anioniques et/ou non ioniques.
